# FASCICULE DE BREVET EUROPEEN

(11) **EP 4 096 878 B1**
(45) Date de publication et mention de la délivrance du brevet: **01.05.2024**
(21) Numéro de dépôt: 21716492.0
(22) Date de dépôt: 11.03.2021
(51) Int. Cl.: B25J 15/00, B25J 15/12, B65G 47/90

(54) **APPAREIL DE PRÉLÈVEMENT OU DE SAISIE AU MOYEN D'UN OUTIL DÉFORMABLE**
VORRICHTUNG ZUM ABTASTEN ODER GREIFEN MITTELS EINES VERFORMBAREN WERKZEUGS
APPARATUS FOR SAMPLING OR GRIPPING BY MEANS OF A DEFORMABLE TOOL

(30) Priorité: 11.03.2020 FR 2002401
(43) Date de publication de la demande: 07.12.2022
(73) Titulaire: ORANO DS - Démantèlement et Services, 91196 Gif-Sur-Yvette (FR)
(72) Inventeur: ESCOFFIER, Cédric, 30200 Bagnols-Sur-Ceze (FR)
(74) Mandataire: Brevalex
(86) Numéro de dépôt international: PCT/FR2021/050414
(87) Numéro de publication internationale: WO 2021/181046

(56) Documents cités:
- EP-A2- 1 731 452
- WO-A1-2016/146140
- WO-A1-2020/160561
- US-B1- 9 623 570

## Description

L'invention présente est relative à un appareil de prélèvement ou de saisie au moyen d'un outil déformable.

Les outils de prélèvement et de saisie existants sont de genres nombreux et variés ; ils reposent le plus souvent soit sur une préhension par un outil solide, soit par une aspiration contre une surface de l'appareil. De tels appareils donnent souvent satisfaction, mais ils présentent en général l'inconvénient d'être limités à certains genres seulement de produits à prélever. Un autre de leurs inconvénients est que-de tels appareils doivent être rendus nettement plus complexes si la préhension doit être rendue sûre. L'invention a au contraire pour but de pouvoir prélever des objets ou des échantillons très variés, par exemple friables, dotés d'une surface très irrégulière ou même liquides, avec une grande fiabilité et une construction simple de l'appareil.

L'art antérieur connexe comprend le document WO 2016 / 146 140 A1, qui décrit un appareil de saisie et de préhension à outil composé d'une membrane déformable sous l'action d'un vérin, et qui saisit de petit objets dans un repli de la membrane formé grâce à la rétraction du vérin. Ce dispositif est encombrant.

Un autre document est EP 1 731 452 A2, qui décrit un appareil auquel les remarques précédentes s'appliquent. Le document WO 2020/160561 décrit un dispositif de préhension comprenant une membrane souple manipulée par des forces électromagnétiques.

Sous une forme générale, l'invention concerne un appareil de prélèvement ou de saisie, comprenant un support ayant une paroi latérale et une face arrière, et un outil monté sur le support, l'outil étant déformable et comprenant un manchon ayant une paroi latérale, et une face d'extrémité et un bord entre lesquels s'étend la paroi latérale de l'outil, le bord étant fixé au support et la face d'extrémité s'étendant à distance du support à un état déployé du manchon où la paroi latérale du support, la paroi latérale du manchon, la face arrière et la face d'extrémité enclosent un volume intérieur, et l'appareil comprenant encore un actionneur de rétraction du manchon ramenant la face d'extrémité dans le volume intérieur et repliant la paroi latérale du manchon jusqu'à un état replié, caractérisé en ce que l'outil comprend encore au moins une couronne de plaquettes attachées au manchon et rayonnant autour du manchon à l'état déployé, l'au moins une couronne de plaquettes est entourée par la paroi latérale du manchon à l'état replié, et l'appareil comprend en outre un moyen de guidage de la rétraction du manchon par l'actionneur de rétraction, s'étendant dans le volume intérieur depuis la face d'extrémité de l'outil jusqu'à la face arrière du support.

Le support est avantageusement une gaine dans laquelle le manchon est contenu à l'état replié.

Le manchon peut être conique en s'effilant vers la face d'extrémité, ce qui facilite son repliement.

Dans une réalisation particulière, le volume intérieur contient un soufflet délimitant une chambre et guidant la rétraction du manchon par l'actionneur de rétraction, et qui constitue le moyen de guidage.

Dans un mode de réalisation particulierde l'invention, le volume intérieur et/ou la chambre est un volume hermétique et l'actionneur de rétraction est un moyen d'aspiration du volume hermétique.

Selon une autre variante de réalisation, l'actionneur de rétraction est un vérin dont la tige est fixée à la face d'extrémité.

Le manchon garni de plaquettes qui caractérise l'invention est apte à se refermer sur un objet ou un échantillon à prélever ou saisir, après avoir été posé sur lui, en rétractant le manchon ; les plaquettes se rapprochent les unes des autres en basculant sur elles-mêmes quand le repli du manchon arrive à leur niveau, leur couronne se referme à l'intérieur de l'outil, délimitant ainsi un compartiment renfermant l'objet ou l'échantillon à l'intérieur du support à l'état final.

Il est avantageux que les plaquettes soient souples, afin de faciliter la prise des objets saisis et d'éviter de les endommager. Il est encore avantageux, dans ce cas de plaquettes souples, qu'elles forment avec le manchon une structure unitaire moulée.

Le manchon, avec les plaquettes le cas échéant, peut être par exemple en silicone ou en polyuréthane ; le manchon peut comporter d'ailleurs un matériau principal tel que ceux-ci, et une feuille de renfort du matériau principal, en Kevlar par exemple.

La couronne, ou chaque couronne, de plaquettes est aussi avantageusement continue et étanche à l'état replié. Elle peut alors retenir un échantillon pouvant être liquide dans un compartiment qu'elle délimite avec d'autres parties de l'appareil.

La préhension ou la saisie d'objets peut aussi être améliorée si les plaquettes sont garnies de moyens facilitant la prise des objets. Il peut s'agir par exemple d'aimants pour faciliter la prise d'objets magnétiques ou d'une surface rugueuse améliorant la prise par frottement.

Dans une autre possibilité de construction, les plaquettes sont creuses à une face orientée vers la face d'extrémité à l'état déployé, afin de pouvoir facilement recueillir des échantillons liquides.

Un aspect important de l'invention est toutefois que la rétraction du manchon souple à partir de l'état déployé est faite par un moyen dit de guidage qui est luimême rétractile, lié à ses extrémités opposées à la face arrière du support et à la face d'extrémité du manchon. De tels moyens de guidage rétractiles ont la propriété d'occuper peu de volume à l'état replié et de rester contre la face arrière du support en toutes circonstances, ce qui réduit le volume de l'appareil par rapport à des moyens de guidage coulissants tels que des tiges de vérin ou des pistons.

Dans certaines réalisations particulièrement appréciées où le support est en forme de gaine, le moyen de guidage reste contenu dans la gaine et protégé par elle en toutes circonstances, et le manchon est lui aussi contenu dans la gaine à l'état replié, avec le même bénéfice. Il est alors particulièrement apprécié que l'actionneur soit un moyen d'aspiration, qu'on peut relier avantageusement à la face arrière du support par un conduit souple d'aspiration du volume intérieur délimité par le manchon et le support, ou d'aspiration de la chambre hermétique délimitée par le soufflet ou un moyen de guidage comparable, quand cette chambre est présente : l'aspiration produit la rétraction du manchon et du moyen de guidage dans les deux cas. On dispose alors d'un appareil particulièrement maniable, car l'outil peut être déplacé indépendamment du moyen d'aspiration, éventuellement à la main si le support est (par exemple) une gaine portative.

Parmi les moyens de guidage utilisables et particulièrement appréciés, on doit aussi mentionner les mécanismes dits télescopiques, composés de sections glissant les unes sur ou dans les autres. De tels mécanismes ont une bonne rigidité, notamment envers des déflexions accidentelles du manchon en direction latérale.

Les déploiements et les repliements du mécanisme télescopique peuvent être limités uniquement par des mécanismes de butée établis entre des sections voisines, donc avec une grande simplicité.

D'après certains aspects de ces réalisations :
- les sections sont des tubes concentriques, dont un tube extérieur forme la gaine en étant fixé à la face arrière du support, et un tube intérieur est fixé à la face d'extrémité de l'outil ;
- lesdites sections sont pourvues de butées limitant des déploiements desdites sections par rapport à des sections voisines ;
- les sections comprennent des verrous d'arrêt des déploiements ou des repliements desdites sections par rapport à des sections voisines ;
- les verrous comprennent chacun un perçage traversant une paroi d'une première des sections, un élément mobile dans le perçage et ayant une dimension, dans une direction de longueur du perçage, plus grande que la longueur du perçage, et des empreintes creusées dans une deuxième et une troisième des sections, les empreintes venant séparément devant des extrémités opposées du perçage pendant des mouvements, et ayant chacune des faces inclinées de manière à repousser l'élément dans le perçage.

Les différents aspects, caractéristiques et avantages de l'invention seront maintenant décrits au moyen des figures suivantes, qui en illustrent certaines réalisations données à titre purement illustratif :
Figure 1 est une vue générale de l'appareil ;
Figure 2 une coupe de la figure 1 ;
Figure 3 une vue de face de l'outil ;
Figure 4 homologue de la figure 1, à un état partiellement replié du manchon ;
Figure 5 homologue de la figure 2, à l'état partiellement replié ;
Figure 6 homologue de la figure 3, à l'état partiellement replié ;
Figure 7 homologue de la figure 1, à un état complètement replié du manchon ;
Figure 8 homologue de la figure 2, à l'état complètement replié ;
Figure 9 homologue de la figure 3, à l'état complètement replié ;
Figure 10 vue en perspective du manchon à l'état déployé, en préliminaire à une saisie ;
Figure 11 le manchon en perspective à un état partiellement replié, ayant saisi l'objet ;
Figure 12 le manchon replié ayant saisi l'objet ;
Figure 13 une autre réalisation de l'invention ;
Figure 14 des pièces de moulage d'une réalisation du manchon ;
Figure 15 une réalisation particulière de plaquettes ;
Figure 16 une autre réalisation particulière de plaquettes ;
Figure 17 représentation d'un mécanisme télescopique de commande du déploiement du manchon à un état rétracté ;
Figure 18 ce mécanisme à l'état complètement déployé ;
Figure 19 vue d'une des sections du mécanisme ;
Figure 20 un moment de processus de repliement du mécanisme ;
Figure 21 un moment immédiatement suivant.

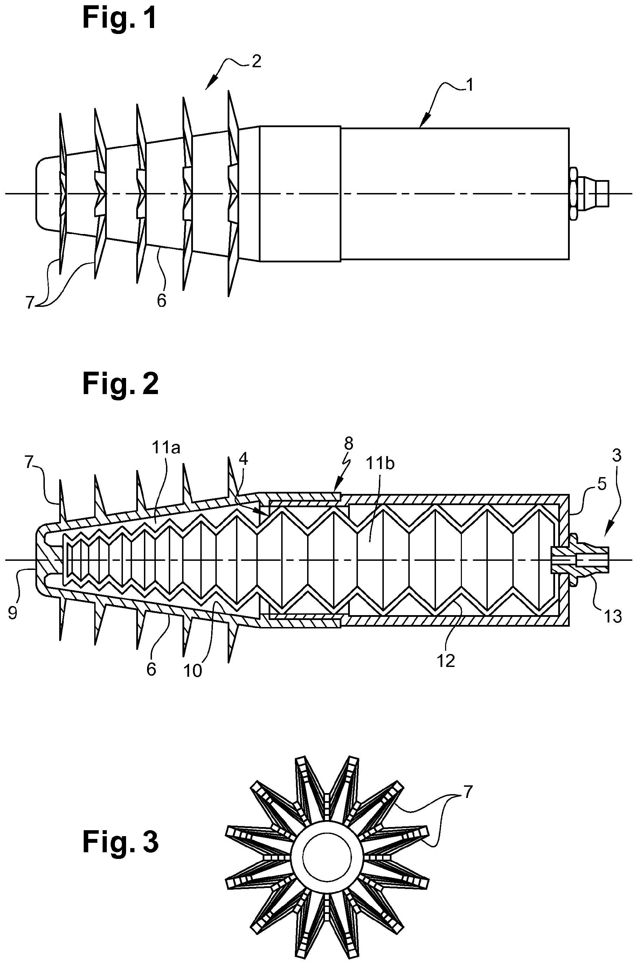

La description porte d'abord sur les figures 1, 2 et 3. La réalisation de l'appareil qui y est représentée se compose principalement d'un support 1, d'un outil 2 et d'un actionneur 3. Le support 1 est une pièce rigide, ici en forme de gaine cylindrique ouverte à une extrémité avant 4 et fermée à une extrémité arrière 5 par une plaque. L'outil 2 est en matériau souple, éventuellement élastique, et il se compose d'un manchon 6 et de plaquettes 7. Le manchon 6 a une extrémité arrière 8 sertie à l'extrémité avant 4 du support 1. Le manchon 6 est principalement constitué d'une paroi latérale conique en s'effilant de l'extrémité arrière 8 ouverte à une extrémité avant, qui est fermée par une face d'extrémité 9. Dans toute cette description, « avant » et « arrière » sont considérés selon une direction de mouvement de l'actionneur de l'outil 2, qui est déployé vers l'avant et replié ou rétracté vers l'arrière. L'appareil est à peu près axisymétrique autour de cette direction, qui peut donc aussi aider à le décrire commodément, l'outil 2 étant en avant du support 1 et de l'actionneur 3.

Les plaquettes 7 sont réparties en groupes formant des couronnes superposées sur la hauteur du manchon 6, autour de l'axe du cône, et ces couronnes sont ici au nombre de cinq, sans que leur nombre soit critique.

La figure 3 montre que les plaquettes 7 ont une forme trapézoïdale s'amincissant vers l'extérieur. Elles sont avantageusement souples, tout comme le manchon 6, et elles sont aussi avantageusement construites d'un bloc avec lui, et donc du même matériau de base. Il est toutefois possible de renforcer le manchon, s'il est par exemple jugé trop souple, par une feuille de renfort 10 qui peut être disposée sur sa paroi intérieure. Des matériaux de base convenant à la fabrication du manchon 6 et éventuellement des plaquettes 7 sont le silicone, le polyuréthane, et quand elle existe, la feuille de renfort 10 peut être en Kevlar (marque déposée).

Le support 1 et le manchon 2, à l'état déployé qui est représenté sur les figures 1 à 3, enclosent un volume intérieur 11a qui s'étend de la face d'extrémité 9 à la face arrière 5. L'actionneur 3 est ici constitué d'une prise d'aspiration 13 établie à la face arrière 5 et débouchant dans le volume intérieur 11a.

Dans une réalisation préférentielle en référence à la figure 2, le volume intérieur 11a comprend un soufflet 12 fixé à la face d'extrémité 9 et à la face arrière 5 par ses extrémités, dont le volume intérieur forme la chambre 11b. La prise d'aspiration 13 débouche alors dans la chambre 11b.

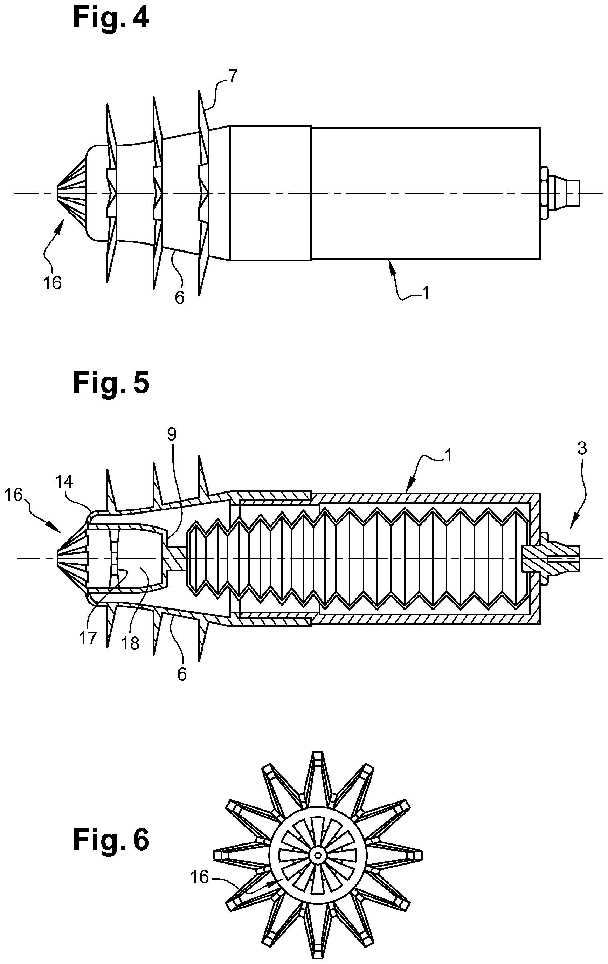

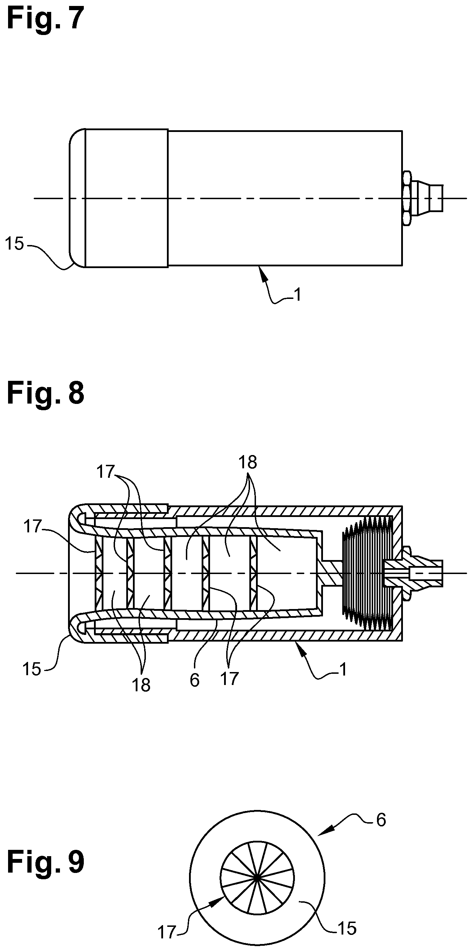

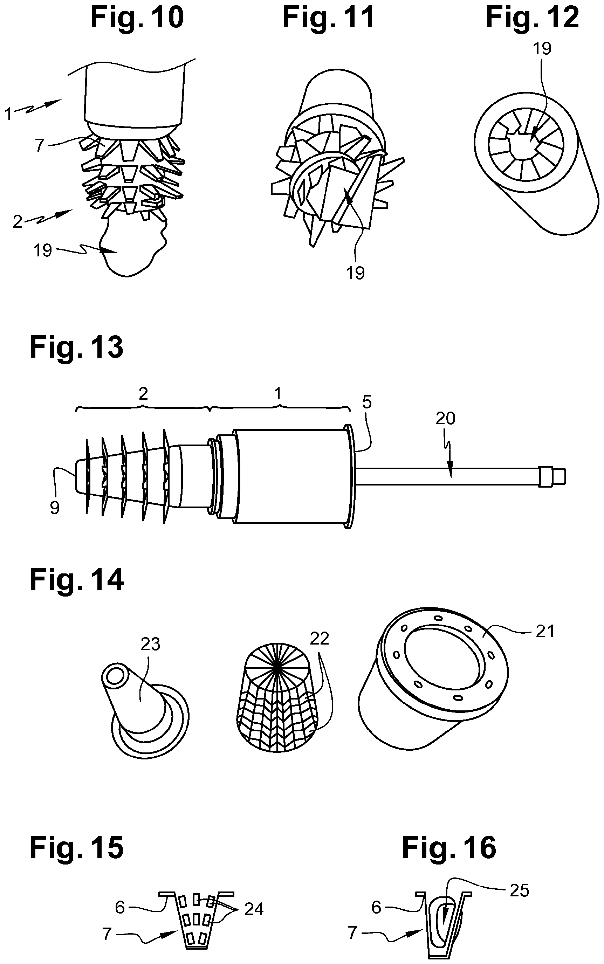

Les figures 4 à 6 illustrent l'appareil à un état partiellement rétracté de l'outil 2, et les figures 7 à 9, l'appareil à un état complètement rétracté. Cela est accompli en aspirant le volume de la chambre 11b par un dispositif non représenté raccordé à la prise d'aspiration 13. La face d'extrémité 9 s'enfonce dans le manchon 6 et entraîne progressivement la partie antérieure du manchon 6 en formant un pli (14 à la figure 5, 15 à la figure 8) sur le manchon 6. Quand le pli 14 atteint les couronnes de plaquettes 7, celles-ci s'inclinent et se referment peu à peu, jusqu'à ce que leurs extrémités deviennent adjacentes (cela est représenté pour la couronne 16 des figures 4 à 6), puis, les couronnes de plaquettes 7 continuant à se refermer, leurs plaquettes 7 deviennent jointives, voire se superposent en formant une surface plane éventuellement continue et étanche vis-à-vis de l'extérieur (c'est le cas des couronnes 17 des figures 5,8 et 9), et qui cloisonne l'intérieur de la partie repliée du manchon 6 en formant des compartiments 18 hermétiques. Dans la réalisation représentée, le manchon 6 est presque complètement logé dans le volume interne du support 1 et protégé par ce dernier à l'état complètement replié.

Quand un objet 19 doit être saisi (figure 10), l'appareil avec le manchon 2 à l'état déployé est approché de lui, et le volume de la chambre 11b est progressivement aspiré tout en maintenant une légère pression du manchon 6 sur l'objet 19. Les couronnes de plaquettes 7 se referment petit à petit sur l'objet 19 (figure 11, qui représente l'appareil à peu près à l'état des figures 4 à 6), et l'objet 19 est progressivement amené à l'intérieur du support 1 à mesure que le manchon 6 se replie (figure 12). Il y est alors naturellement retenu.

L'appareil, illustré ici pour saisir un objet 19 solide, pourrait aussi bien être utilisé pour prélever un échantillon d'un produit pulvérulent, liquide ou autre, dans les réalisations où les plaquettes 7 se refermant délimitent les compartiments 18 de façon hermétique.

D'autres modes de réalisations de l'invention sont évidemment possibles. C'est ainsi que le moyen d'aspiration constituant l'actionneur de rétraction pourrait être remplacé par un vérin 20 (figure 13), dont une extrémité mobile est aussi fixée à la face d'extrémité 9, et qui s'étend en arrière de l'appareil en traversant la face arrière 5. Le soufflet peut avantageusement être conservé en association avec le vérin puisqu'il permet le guidage de la rétraction du manchon.

L'outil 2 peut être fabriqué par moulage. Un exemple d'ensemble de moulage est représenté à la figure 14 et comprend un cylindre 21 extérieur, un groupe de secteurs de moulage 22 et un noyau central 23. Les plaquettes 7 sont moulées dans des entailles de formes correspondantes des secteurs de moulage 22, et le manchon 6 est moulé dans un intervalle qui subsiste entre les secteurs de moulage 22 et le noyau central 23 quand ils ont tous été placés dans le cylindre 21. La fabrication des secteurs de moulage 22 et du noyau central 23 peut s'effectuer par une impression tridimensionnelle ou par un moulage à partir de contre-moules.

Les plaquettes 7 peuvent être perfectionnées pour favoriser la préhension ou l'accrochage de certaines catégories d'objets ou de produits. Elles peuvent par exemple (figure 15) être munies d'aimants 24 permanents, ou avoir (figure 16) leur face orientée vers l'extrémité 9 munie d'une concavité 25 qui permet le prélèvement d'un produit liquide.

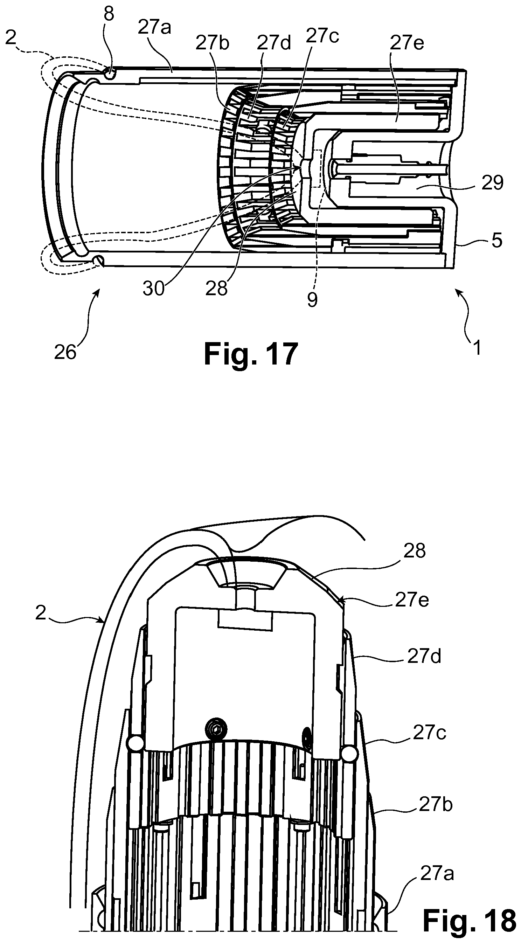

On aborde à présent les figures 17 et suivantes pour décrire un mode de réalisation particulièrement apprécié pour l'invention. Il repose sur l'emploi d'un mécanisme télescopique 26 pour commander les déploiements et les repliements du manchon 6. Ses extrémités opposées sont fixées respectivement à la face arrière 5 du support 1 et à la face d'extrémité 9 du manchon 6. Il se compose de tubes 27 concentriques et glissant les uns dans les autres dans la direction de déploiement du manchon 6. Les tubes 27 sont ici au nombre de cinq et notés de 27a à 27e de leur plus grand rayon à leur plus petit rayon. Le tube 27a extérieur est fixe et fait en réalité partie du support 1 ; c'est lui qui, fixé à la face arrière 5 par son extrémité arrière, forme la gaine. Les trois tubes 27b, 27c et 27d suivants sont des tubes intermédiaires composés chacun d'une paroi cylindrique comme le tube 27a extérieur; et le tube 27e intérieur est composé d'une paroi cylindrique et d'une face frontale 28 à l'avant, à laquelle l'extrémité avant 9 du manchon 6 est fixée. Les tubes 27b à 27e sont mobiles par rapport au support 1. Les tubes 27a à 27e sont successivement saillants les uns hors des autres vers l'avant à l'état déployé (figure 18), et ils sont contenus les uns dans les autres à l'état replié (figure 17), où ils touchent, ou presque, la face arrière 5 du support 1. Un embout 29 d'aspiration, qui retient l'extrémité d'un conduit d'aspiration non représenté, peut alors s'étendre dans le creux du tube 27e intérieur. Comme dans la réalisation précédente, la rétraction du manchon 6, en même temps que celle du mécanisme télescopique 26, se fait en aspirant le contenu gazeux du volume intérieur 11a par un perçage 30 de l'embout 29. Comme le tube 27a extérieur formant la gaine du support 1 est beaucoup plus long que les autres, une grande longueur de repli à l'intérieur de la gaine est offerte au manchon 6 à l'état replié.

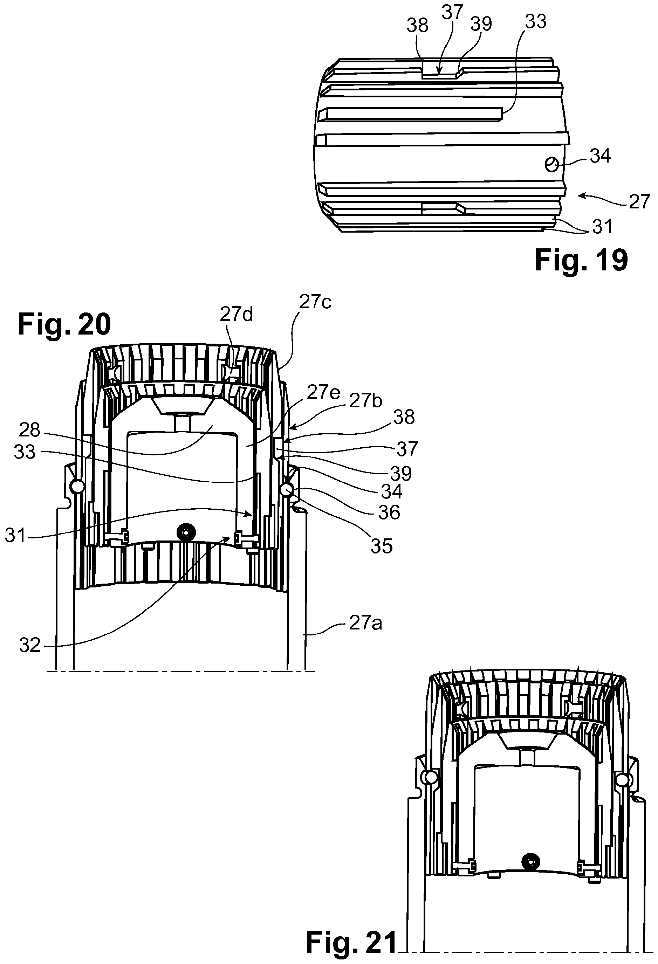

Les parois cylindriques des tubes 27 sont pourvues (figure 19) d'abord de cannelures 31 orientées dans la direction de rétraction, et dans certaines desquelles glissent des pions 32 (ici formés par des vis visibles sur la figure 20) du tube 27 voisin, afin de maintenir les tubes 27 à des positions angulaires invariables. Les cannelures 31 correspondantes ont une face de butée 33 à leur extrémité avant, afin d'arrêter le pion 32 correspondant et le déploiement du tube 27 qui le porte.

Un système de verrouillage notable est proposé afin de garantir un repliement échelonné et progressif du mécanisme télescopique 26 ; son fonctionnement sera mieux compris au moyen des figures 20 et 21. Chacun des tubes 27b, 27c et 27d intermédiaires est pourvu d'un perçage 34 radial qui traverse toute l'épaisseur de sa paroi cylindrique, et qui contient une pièce de verrouillage telle qu'une bille 35 qui y est mobile radialement et a un diamètre plus grand que l'épaisseur de la paroi cylindrique. Le tube 27 voisin extérieur (27a, 27b ou 27c) est creusé d'une empreinte 36 en portion de sphère dans laquelle la bille 35 peut pénétrer quand elle arrive devant cette empreinte 36. De plus, le tube 27 voisin intérieur (27c, 27d ou 27e) comporte une empreinte 37 en rainure courte limitée à l'avant par une face droite 38 (perpendiculaire à la direction de rétraction) et à l'arrière par une face biseautée 39 (oblique, inclinée vers l'arrière en direction radiale extérieure). A l'état de déploiement, les billes 35 s'étendent à la fois dans les perçages 34 et les empreintes 36, où elles sont maintenues par les tubes 27 immédiatement intérieurs, alors que les empreintes 37 en rainures courtes sont nettement en avant. Quand la rétraction commence, le tube 27e intérieur recule d'abord seul vers l'arrière, jusqu'à ce que son empreinte 37 en rainure courte arrive devant la bille 35 logée dans le tube 27d immédiatement voisin. La bille 35 passe dans l'empreinte 37 en rainure courte en glissant hors de l'empreinte 36, ce qui libère le tube 27d du tube 27c immédiatement extérieur et lui permet de reculer avec le tube 27e intérieur, et de conserve avec lui, dès que la bille 35 a touché la face droite 38. La bille 35 est maintenue dans l'empreinte 37 en rainure courte dès qu'elle est descendue au-dessous de l'empreinte 36. Le processus se répète ensuite successivement pour chacun des systèmes de verrouillage. Les billes 35 sont toutes dans les empreintes 37 en rainures courtes à l'état de repli complet du mécanisme télescopique 26 et du manchon 6, et elles sont toutes dans les empreintes 36 à leur état complètement déployé. Les mouvements de repliement commencent toujours par le tube 27e intérieur, dont la face frontale 28 subit les pressions différentielles produites par le dispositif d'aspiration. Le déploiement du système télescopique 26 est cinématiquement identique en sens inverse, c'est-à-dire que le tube 27e intérieur entraîne d'abord tous les tubes 27b à 27d intermédiaires, jusqu'à ce que les billes 35 pénètrent successivement dans les empreintes 36 des tubes 27a à 27c immédiatement extérieurs, en y étant poussées par les faces biseautées 39 : les tubes 27b, 27c, 27d et 27e s'arrêtent alors.

Ce mécanisme télescopique offre donc un fonctionnement ordonné, une grande stabilité dans les états de déploiement et de repliement, et une rigidité certaine contre des déflexions latérales accidentelles du manchon 6 à l'état déployé. Sa structure est simple et robuste. Il peut être actionné autrement que par des pressions de gaz, malgré les avantages offerts par ce moyen.

## Revendications

1. Appareil de prélèvement ou de saisie, comprenant un support (1) ayant une paroi latérale et une face arrière (5) et un outil (2) monté sur le support, l'outil étant déformable et comprenant un manchon (6) ayant une paroi latérale, et une face d'extrémité (9) et un bord (8) entre lesquels s'étend la paroi latérale de l'outil, le bord (8) étant fixé au support (1) et la face d'extrémité s'étendant à distance du support à un état déployé du manchon où la paroi latérale du support (1), la paroi latérale du manchon (6), la face arrière (5) et la face d'extrémité (9) enclosent un volume intérieur (11a) s'étendant de la face d'extrémité (9) à la face arrière (5), et l'appareil comprenant encore un actionneur de rétraction (3) du manchon ramenant la face d'extrémité (9) dans le volume intérieur (11a) et repliant la paroi latérale du manchon (6) jusqu'à un état replié, **caractérisé en ce que** l'outil comprend encore au moins une couronne de plaquettes (7) attachées au manchon (6) et rayonnant autour du manchon à l'état déployé, l'au moins une couronne de plaquettes est entourée par la paroi latérale du manchon à l'état replié, et l'appareil comprend en outre un moyen (12) rétractile de guidage de la rétraction du manchon par l'actionneur de rétraction (3), s'étendant dans le volume intérieur (11a) en étant lié à ses extrémités opposées à la face arrière (5) du support (1) et à la face d'extrémité (9) du manchon (6)

2. Appareil de prélèvement ou de saisie selon la revendication 1, **caractérisé en ce que** le support (1) est une gaine dans laquelle le manchon (6) est contenu à l'état replié, et la face arrière (5) est une plaque fermant la gaine à une extrémité arrière de la gaine.

3. Appareil de prélèvement ou de saisie selon la revendication 1 ou 2, **caractérisé en ce que** le moyen de guidage est un soufflet (12) délimitant une chambre (11b) incluse dans le volume intérieur (11a).

4. Appareil de prélèvement ou de saisie selon la revendication 3, **caractérisé en ce que** la chambre (11b) est hermétique, et l'actionneur de rétraction (3) est un moyen d'aspiration (13) de la chambre (11b).

5. Appareil de prélèvement selon la revendication 2, **caractérisé en ce que** le moyen de guidage est un mécanisme télescopique (26), composé de sections (27) glissant les unes sur ou dans les autres, et **en ce que** les sections sont des tubes concentriques, dont un tube (27a) extérieur forme la gaine en étant fixé à la face arrière (5) du support, et un tube (27e) intérieur est fixé à la face d'extrémité (9) de l'outil (2).

6. Appareil de prélèvement selon la revendication 5, **caractérisé en ce que** lesdites sections sont pourvues de butées (32, 33) limitant des déploiements desdites sections par rapport à des sections voisines.

7. Appareil de prélèvement selon l'une quelconque des revendications 5 ou 6, **caractérisé en ce que** les sections comprennent des verrous d'arrêt des déploiements ou des repliements desdites sections par rapport à des sections voisines.

8. Appareil de prélèvement selon la revendication 7, **caractérisé en ce que** les verrous comprennent chacun un perçage (34) traversant une paroi d'une première des sections, un élément mobile (35) dans le perçage et ayant une dimension, dans une direction de longueur du perçage, plus grande que la longueur du perçage, et des empreintes (36, 37) creusées dans une deuxième et une troisième des sections, les empreintes venant séparément devant des extrémités opposées du perçage pendant des mouvements, et ayant chacune des faces (39) inclinées de manière à repousser l'élément dans le perçage.

9. Appareil de prélèvement ou de saisie selon l'une quelconque des revendications 1 à 8, **caractérisé en ce que** le volume intérieur (11a) est hermétique, et l'actionneur de rétraction (3) est un moyen d'aspiration (13) du volume intérieur (11a).

10. Appareil de prélèvement ou de saisie selon l'une quelconque des revendications 1 à 9, **caractérisé en ce que** le manchon comporte un matériau principal et une feuille de renfort (10) du matériau principal.

11. Appareil de prélèvement ou de saisie selon l'une quelconque des revendications 1 à 10, **caractérisé en ce que** l'au moins une couronne de plaquettes est continue et étanche à l'état replié.

12. Appareil de prélèvement ou de saisie selon l'une quelconque des revendications 1 à 11, **caractérisé en ce que** les plaquettes portent des moyens (24) facilitant la prise des objets à prélever ou saisir.

13. Appareil de prélèvement ou de saisie selon l'une quelconque des revendications 1 à 12, **caractérisé en ce que** les plaquettes sont creuses (25) à une face orientée vers la face d'extrémité à l'état déployé.

## Patentansprüche

1. Probenentnahme- oder Greifvorrichtung, umfassend einen Träger (1), der eine Seitenwand und eine Rückseite (5) aufweist, und ein an dem Träger befestigtes Werkzeug (2), wobei das Werkzeug verformbar ist und ein Griffstück (6) mit einer Seitenwand aufweist, und eine Endfläche (9) und eine Kante (8), zwischen denen sich die Seitenwand des Werkzeugs erstreckt, wobei die Kante (8) an dem Träger (1) befestigt ist und die Endfläche sich in einem Abstand vom Träger in einem ausgefahrenen Zustand des Griffstücks erstreckt, in dem die Seitenwand des Trägers (1), die Seitenwand des Griffstücks (6), die Rückseite (5) und die Endfläche (9) ein Innenvolumen (11a) umschließen, das sich von der Endfläche (9) zur Rückseite (5) erstreckt, und die Vorrichtung weiterhin einen Rückzugsbetätiger (3) des Griffstücks umfasst, der die Endfläche (9) in das Innenvolumen (11a) holt und die Seitenwand des Griffstücks (6) bis in einen eingefahrenen Zustand zusammenfaltet, **dadurch gekennzeichnet, dass** das Werkzeug weiterhin mindestens einen Plättchenkranz (7) umfasst, der an das Griffstück (6) befestigt ist und im ausgefahrenen Zustand strahlenförmig um das Griffstück verläuft, wobei der mindestens eine Plättchenkranz von der Seitenwand des Griffstücks im eingefahrenen Zustand umgeben ist, und die Vorrichtung ferner ein einziehbares Mittel (12) zum Steuern des Zurückziehens des Griffstücks durch den Rückzugsbetätiger (3) umfasst, das sich in das Innenvolumen (11a) erstreckt und an seinen gegenüberliegenden Enden mit der Rückseite (5) des Trägers (1) und mit der Endfläche (9) des Griffstücks (6) verbunden ist.

2. Probenentnahme- oder Greifvorrichtung nach Anspruch 1, **dadurch gekennzeichnet, dass** der Träger (1) eine Hülle ist, in der das Griffstück (6) im eingefahrenen Zustand untergebracht ist, und die Rückseite (5) eine Platte ist, die die Hülle an einem hinteren Ende der Hülle verschließt.

3. Probenentnahme- oder Greifvorrichtung nach Anspruch 1 oder 2, **dadurch gekennzeichnet, dass** das Führungsmittel ein Balg (12) ist, der eine Kammer (11b) definiert, die in dem Innenvolumen (11a) enthalten ist.

4. Probenentnahme- oder Greifvorrichtung nach Anspruch 3, **dadurch gekennzeichnet, dass** die Kammer (11b) hermetisch ist und der Rückzugsbetätiger (3) ein Ansaugmittel (13) der Kammer (11b) ist.

5. Probenentnahmevorrichtung nach Anspruch 2, **dadurch gekennzeichnet, dass** das Führungsmittel ein Teleskopmechanismus (26) ist, der aus übereinander oder ineinander gleitenden Abschnitten (27) besteht, und dadurch, dass die Abschnitte konzentrische Rohre sind, von denen ein äußeres Rohr (27a) die Hülle bildet, indem es an der Rückseite (5) des Trägers befestigt wird, und ein inneres Rohr (27e) an die Endfläche (9) des Werkzeugs (2) befestigt ist.

6. Probenentnahmevorrichtung nach Anspruch 5, **dadurch gekennzeichnet, dass** die Abschnitte mit Anschlägen (32, 33) versehen sind, die das Ausfahren der Abschnitte im Verhältnis zu benachbarten Abschnitten begrenzen.

7. Probenentnahmevorrichtung nach einem der Ansprüche 5 oder 6, **dadurch gekennzeichnet, dass** die Abschnitte Verriegelungen zum Stoppen des Ausfahrens oder Einfahrens der Abschnitte im Verhältnis zu benachbarten Abschnitten umfassen.

8. Probenentnahmevorrichtung nach Anspruch 7, **dadurch gekennzeichnet, dass** die Verriegelungen jeweils ein Loch (34), das durch eine Wand eines ersten der Abschnitte verläuft, ein bewegliches Element (35) innerhalb des Lochs mit einer Abmessung in der Längsrichtung des Lochs, die größer als die Länge des Lochs ist, und hohle Vertiefungen (36, 37) in einem zweiten und einem dritten der Abschnitte umfassen, wobei die Vertiefungen während der Bewegungen getrennt vor gegenüberliegenden Enden des Lochs hinkommen und jeweils geneigte Flächen (39) aufweisen, um das Elemente in das Loch zu stoßen.

9. Probenentnahme-oderGreifvorrichtung nach einem der Ansprüche 1 bis 8, **dadurch gekennzeichnet, dass** das Innenvolumen (11a) hermetisch ist und der Rückzugsbetätiger (3) ein Ansaugmittel (13) des Innenvolumens (11a) ist.

10. Probenentnahme- oder Greifvorrichtung nach einem der Ansprüche 1 bis 9, **dadurch gekennzeichnet, dass** das Griffstück ein Hauptmaterial und eine Verstärkungsfolie (10) des Hauptmaterials umfasst.

11. Probenentnahme- oder Greifvorrichtung nach einem der Ansprüche 1 bis 10, **dadurch gekennzeichnet, dass** der mindestens eine Plättchenkranz durchgehend und im eingefahrenen Zustand dicht ist.

12. Probenentnahme- oder Greifvorrichtung nach einem der Ansprüche 1 bis 11, **dadurch gekennzeichnet, dass** die Plättchen Mittel (24) tragen, die das Erfassen der zu entnehmenden oder zu greifenden Objekte erleichtern.

13. Probenentnahme- oder Greifvorrichtung nach einem der Ansprüche 1 bis 12, **dadurch gekennzeichnet, dass** die Plättchen im ausgefahrenen Zustand an einer Fläche, die zur Endfläche hin ausgerichtet ist, hohl (25) sind.

## Claims

1. A sampling or gripping apparatus, comprising a support (1) having a lateral wall and a rear face (5) and a tool (2) mounted on the support, the tool being deformable and comprising a sleeve (6) having a lateral wall, and an end face (9) and an edge (8) between which the lateral wall of the tool extends, the edge (8) being fastened to the support (1) and the end face extending away from the support in a deployed state of the sleeve where the lateral wall of the support (1), the lateral wall of the sleeve (6), the rear face (5) and the end face (9) enclose an internal volume (11a) extending from the end face (9) to the rear face (5), and the apparatus further comprising a sleeve retraction actuator (3) returning the end face (9) into the internal volume (11a) and folding the lateral wall of the sleeve (6) to a folded state, **characterised in that** the tool further comprises at least one ring of wafers (7) which are attached to the sleeve (6) and radiating around the sleeve in the deployed state, the at least one ring of wafers is surrounded by the lateral wall of the sleeve in the folded state, and the apparatus further comprises retractable means (12) for guiding the retraction of the sleeve by the retraction actuator (3), extending in the internal volume (11a) by being connected, at the opposite ends thereof, to the rear face (5) of the support (1) and to the end face (9) of the sleeve (6).

2. The sampling or gripping apparatus according to claim 1, **characterised in that** the support (1) is a sheath in which the sleeve (6) is contained in the folded state, and the rear face (5) is a plate closing the sheath at a rear end of the sheath.

3. The sampling or gripping apparatus according to claim 1 or 2, **characterised in that** the guide means is a bellows (12) delimiting a chamber (11b) included in the internal volume (11a).

4. The sampling or gripping apparatus according to claim 3, **characterised in that** the chamber (11b) is hermetic, and the retraction actuator (3) is means (13) for sucking the chamber (11b).

5. The sampling apparatus according to claim 2, **characterised in that** the guide means is a telescopic mechanism (26), composed of sections (27) sliding on or in each other, and **in that** the sections are concentric tubes, an outer tube (27a) of which forms the sheath by being fastened to the rear face (5) of the support, and an inner tube (27e) of which is fastened to the end face (9) of the tool (2).

6. The sampling apparatus according to claim 5, **characterised in that** said sections are provided with stops (32, 33) limiting deployments of said sections relative to neighbouring sections.

7. The sampling apparatus according to any one of claims 5 or 6, **characterised in that** the sections comprise locks for stopping the deployments or the foldings of said sections relative to neighbouring sections.

8. The sampling apparatus according to claim 7, **characterised in that** the locks each comprise a bore (34) passing through a wall of a first of the sections, a movable element (35) in the bore and having a dimension, in a direction of length of the bore, which is greater than the length of the bore, and cavities (36, 37) dug into a second and a third of the sections, the cavities separately coming in front of opposite ends of the bore during movements, and each having faces (39) which are inclined so as to push the element into the bore.

9. The sampling or gripping apparatus according to any one of claims 1 to 8, **characterised in that** the internal volume (11a) is hermetic, and the retraction actuator (3) is means (13) for sucking the internal volume (11a).

10. The sampling or gripping apparatus according to any one of claims 1 to 9, **characterised in that** the sleeve includes a main material and a sheet (10) for reinforcing the main material.

11. The sampling or gripping apparatus according to any one of claims 1 to 10, **characterised in that** the at least one ring of wafers is continuous and sealed in the folded state.

12. The sampling or gripping apparatus according to any one of claims 1 to 11, **characterised in that** the wafers carry means (24) facilitating taking the objects to be sampled or gripped.

13. The sampling or gripping apparatus according to any one of claims 1 to 12, **characterised in that** the wafers are hollow (25) with one face facing the end face in the deployed state.
